# EUROPÄISCHE PATENTSCHRIFT

(11) **EP 1 467 465 B1**
(45) Veröffentlichungstag und Bekanntmachung des Hinweises auf die Patenterteilung: **24.06.2009**
(21) Anmeldenummer: 03027524.2
(22) Anmeldetag: 29.11.2003
(51) Int. Cl.: H05B 37/03

(54) **Verfahren und Vorrichtung zur sicheren Notbeleuchtung von Tunneln**
Method and device for safe emergency lighting of tunnels
Procédé et dispositif pour l'éclairage de secours assuré des tunnels

(30) Priorität: 07.04.2003 DE 10316008
(43) Veröffentlichungstag der Anmeldung: 13.10.2004
(73) Patentinhaber: DB Netz Aktiengesellschaft, 60486 Frankfurt am Main (DE)
(72) Erfinder: Kanter, Michael, 39104 Magdeburg (DE); Lüdeke, Sven, 01594 Grubnitz (DE)
(74) Vertreter: Zinken-Sommer, Rainer

(56) Entgegenhaltungen:
- EP-A- 0 415 621
- WO-A-00/43966
- US-A- 4 945 280

## Beschreibung

Die Erfindung betrifft ein Verfahren und eine Vorrichtung zur sicheren Notbeleuchtung von Tunneln, vorzugsweise von Eisenbahntunneln im Gefahrenfall, wobei eine Überwachung aller Tunnelleuchten und Geräte erfolgt.

Tunnelsicherheitsbeleuchtungen gehören in allen verkehrstechnisch erschlossenen Tunneln zu den durchzuführenden Sicherheitsmassnahmen, die eine Selbstrettung von Reisenden sowie den Einsatz von Rettungsdiensten ermöglichen.
Den aktuellen sicherheitstechnischen Ansprüchen an Eisenbahntunnel genügende (zugelassene) automatische Überwachungssysteme für diese Beleuchtungen und die damit in Verbindung stehenden Einrichtungen sind nicht bekannt.
Aus der DE 31 01 591 C2 ist ein Verfahren zur Steuerung einer Tunnelbeleuchtungsanlage und Einrichtungen zur Durchführung des Verfahrens bekannt. Hierbei wird allerdings nur eine gesteuerte und optimierte Ausleuchtung des Tunnels für Autofahrer beschrieben.
In DE 41 20 816 C2 wird ein Verfahren zur Überwachung von Tunnelbauwerken gegen unberechtigte Anwesenheit von Personen, Fahrzeugen, festen, flüssigen oder gasförmigen Soffen mittels einer Überwachungseinrichtung mit zumindest einem im Tunnel angeordneten Infrarotsensor und einer als definierte Eichquelle dienenden IR-Marke bekannt. Die Steuerung und Überwachung einer Tunnelnotbeleuchtung wird nicht beschrieben.

Bekannt ist eine Lichtvorrichtung, wobei verschiedene Lichtdioden bezüglich ihres Licht-Abgabe-Zustandes und der Stromversorgung durch eine Zentrale (Computer) überwacht werden (US 2002/0140379 A1). Es soll u.a. verhindert werden, dass eine Notbeleuchtung durch eine Stromausfall ihren Dienst versagt. Dieses Notbeleuchtungssystem ist auch für Tunnel anwendbar. Die Vorrichtung ist nicht stromversorgungsautark. Es erfolgt keine Überwachung einer zuvor ermittelten Strombilanz einer Tunnelbeleuchtung, der installierten BUS-Systeme und der Notlichtversorgungsgeräte (NVG).

Weiterhin ist aus der CH 582 438 A5 eine Notbeleuchtungsanlage in einem Fahrzeug-Tunnel bekannt, wobei hier eine neben der normalen Stromversorgung eine separate Sekundärbatterie zum Einsatz kommt. Es erfolgt keinerlei Tunnelüberwachung über eine Fernwirkzentrale.

Bekannt ist ein Kommunikationssystem zur punktweisen Überwachung einer Notbeleuchtung nach EP 0 415 621 A2. Hierfür wird ein Microcomputer verwendet, der in jedem einzelne Punkt der Notbeleuchtung die Stromversorgung kontrolliert und eine Überwachung der Batterie sowie der Batteriespannung durchführt.

Die US 6 502 044 B1 beschreibt eine Überwachung von Lichtvorrichtung in Tunneln, wobei verschiedene Lichtdioden bezüglich ihres Licht-Abgabe-Zustandes und der Stromversorgung durch eine Zentrale (Computer) überwacht werden.

Die WO 00/43966 A1 beschreibt eine allgemeine Notbeleuchtungsanlage, wobei diese Anlage einen einprogrammierten Selbsttest aufweist. Diese Veröffentlichung zeigt dem Oberbegriff des Anspruchs 1.

Die US 4 945 280 beschreibt ein Zentralbatteriesystem, welches eigene Fehler melden kann.

Der Erfindung liegt die Aufgabe zugrunde, eine Überwachung von Notbeleuchtungen in Tunneln insoweit zu entwickeln, dass diese unter allen Umständen - auch bei Unfällen - sicher und autark betrieben werden können.

Dies wird erfindungsgemäß dadurch erreicht, dass die Notlichtversorgungsgeräten (NVG) über einen Ringbus mit der Tunnelüberwachungszentrale TÜZ (1) verbunden sind, wobei der Ring bei einseitiger Verkabelung derart aufgebaut wird, dass vom Tunnelanfang bis zum Tunnelende (Hinrichtung) nur jedes zweite NVG (2) angeschlossen wird und die verbleibenden NVG (2) erst in die Rückrichtung eingebunden werden.

In besonderer Art und Weise erfolgt erfindungsgemäß eine permanente Überwachung der Betriebsfähigkeit aller im Tunnel angeordneten Lampen, des Bussystems der TSB, der stromversorgungsautarken Batterie- und/oder Akkuspannung und einer zuvor ermittelten Strombilanz, die sich insbesondere aus Ladestrom, Verbraucherstrom und Entladestrom der NVG zusammensetzt.

Zudem wird über ein im NVG integriertes internes Prüfprogramm eine Eigenüberwachung des NVG durchgeführt.

Eine Vorrichtung gemäß der Erfindung wird in Anspruch 7 ausgeführt.

Eine Vorrichtung zur sicheren Notbeleuchtung von Tunneln, insbesondere von Eisenbahntunneln im Gefahrenfall, sieht vor, dass eine bedarfsorientiert im Bereitschaftsbetrieb arbeitende, zumindest zeitweilig stromversorgungsautarke Tunnelsicherheitsbeleuchtung (TSB) einerseits über eine Tunnelüberwachungs-zentrale (TÜZ) mit einer Reihe von Notlichtversorgungsgeräten (NVG), die jeweils zwei Tunnelleuchten speisen, gekoppelt und anderseits über eine Kommunikationsleitung mit einem Fernwirksystem verbunden ist.

Alle installierten NVG sind mittels Ring-Bus-System an die TÜZ angeschlossen.

Die TÜZ ist als Schnittstelle zum übergelagerten Kommunikationsnetz, zum örtlichen BUS-System und zu sonstigen elektrotechnischen Komponenten ausgebildet. Des weiteren ist die TÜZ mit einer unterbrechungsfreien Stromversorgung (USV) und einer Funkuhr ausgestattet.

Das NVG weist eine zentrale Steuerbaugruppe auf, die mit einem Wechselrichter, einem Laderegler, einer Kommunikationsschnittstelle, zwei Tunnelleuchten und einer Statusanzeige verbunden ist.
Dabei ist der Laderegler einerseits über ein Netzteil und eine Prüftaste mit einer Netzleitung und andererseits mit einem Akku verbunden.
Der Wechselrichter ist einerseits über einen Schalter mit den Tunnelleuchten oder der Netzleitung und andererseits , vorzugsweise über einen weiteren Schalter, mit dem Laderegler verbunden.

Die Einschaltung der Beleuchtung erfolgt entweder im Tunnel über manuelles Betätigen eines Tastschalters an jedem NVG und/oder über die TÜZ. Ein manuelles Ausschalten im Tunnel wird aus Sicherheitsgründen verhindert. Die ist nur von der den Betrieb überwachenden Stelle sowie von der TÜZ aus möglich.

Die Vorrichtung weist weiterhin eine Batterie-/ Akkuladeeinrichtung und einen Wechselrichter auf. Dabei muss die Batterie-/Akkuladeeinrichtung folgenden Anforderungen genügen:
- automatische Regelung der vorgeschriebenen Batterie- /Akkuspannung
- temperaturkompensierte Laderegelung
- Tiefentladungsschutz
- automatische Rücksetzung der Wiedereinschaltsperre bei angezogenem Tiefentladungsschutz
- Ladung auf 90 % der Nennkapazität in ca. 10 Stunden nach einer vollständigen Entladung.

Anhand eines Ausführungsbeispieles soll nachfolgend die Erfindung näher erläutert werden.
Dabei zeigen:

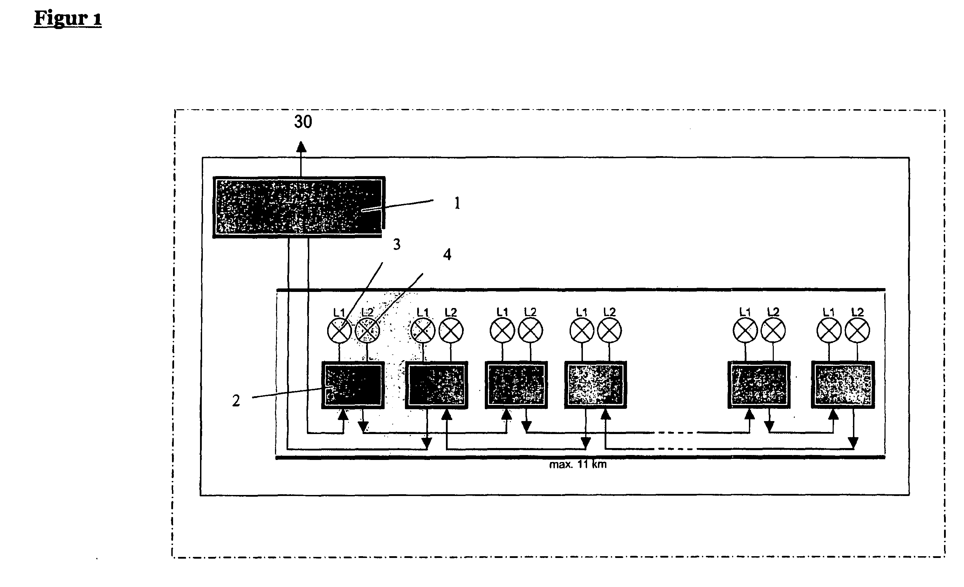

- Figur 1 - das Übersichtsschema der Tunnelnotbeleuchtung
- Figur 2 - die Anordnung der Elektronikkomponenten im Notversorgungsgerät

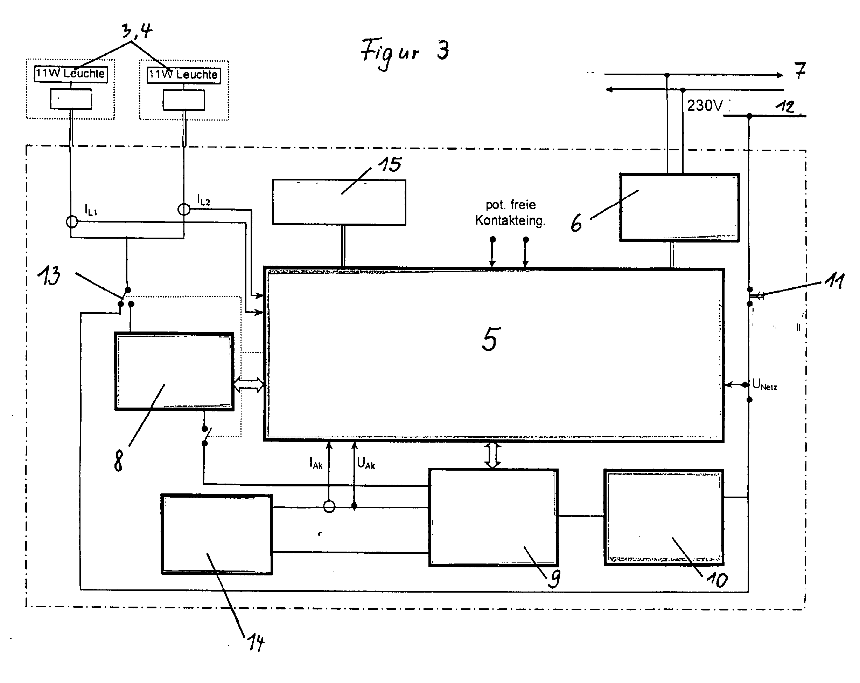

- Figur 3 - die Struktur des Notversorgungsgerätes
- Figur 4 - die Struktur der Tunnelüberwachungszentrale

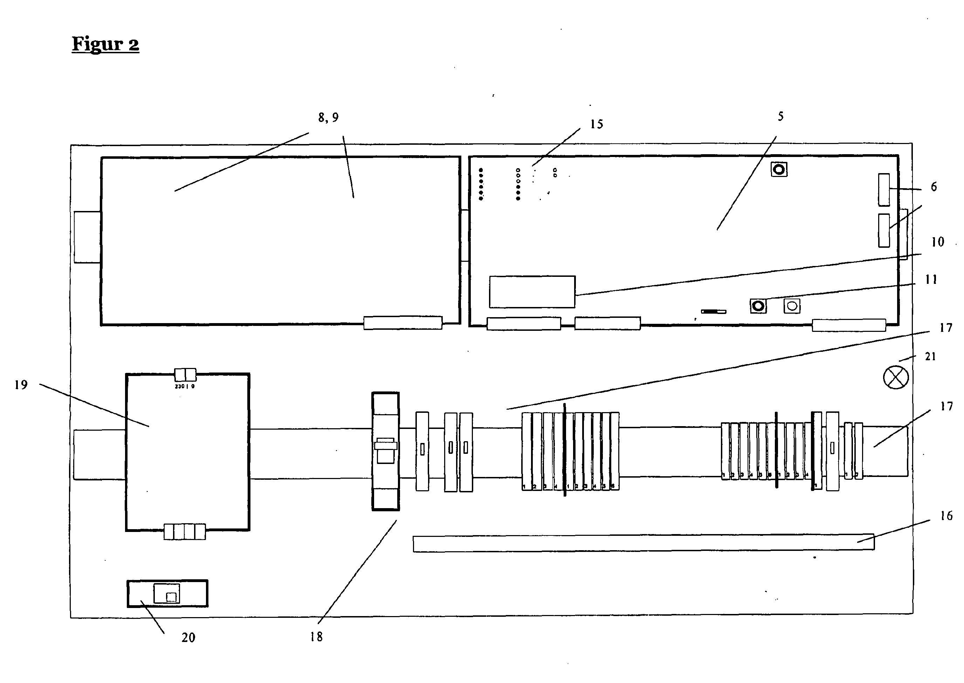

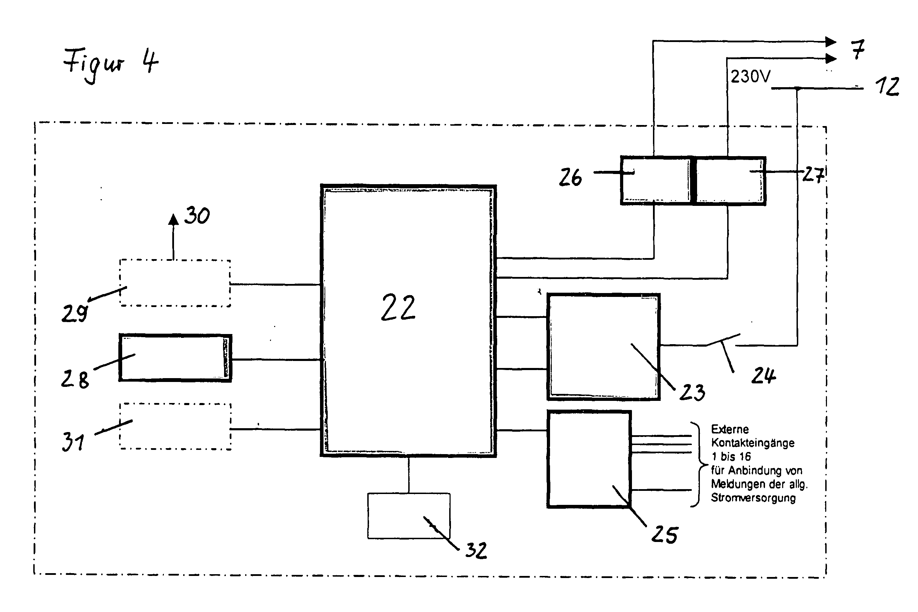

Die Tunnelsicherheitsbeleuchtung (TSB) wird über die Tunnelüberwachungszentrale-TÜZ (1) überwacht, die mit den Notversorgungsgeräten (2) über ein Bussystem verbunden sind. Die Notversorgungsgeräte-NVG (2) versorgen und überwachen jeweils zwei nicht benachbarte Tunnelnotleuchten (3;4). Die Tunnelsicherheitsbeleuchtung ist als Einzelbatterie-/Akkuanlage aufgebaut und arbeitet als bedarfsorientierte Sicherheitsbeleuchtung im Bereitschaftsbetrieb. Die Einschaltung der Beleuchtung erfolgt im Tunnel und/oder über die TÜZ (1). Aus Sicherheitsgründen ist ein manuelles Ausschalten der TSB im Tunnel nicht zulässig. Das Ausschalten erfolgt nur von der betriebsüberwachenden Stelle sowie durch die TÜZ (1). Durch den Ausfall eines NVG (2) wird die Busverbindung zu den anderen NVG nicht gestört. Jedes NVG (2) beinhaltet eine zentrale Steuerbaugruppe (5), die über eine Kommunikationsschnittstelle (6) mit einem Kommunikationsnetz (7) verbunden ist. Desweiteren ist die zentrale Steuerbaugruppe (5) mit einem Wechselrichter (8) gekoppelt, der einerseits über einen Laderegler (9) mit einem Netzteil (10) und über eine Prüftaste (11) einer Netzleitung (12) und andererseits über einen Schalter (13) mit zwei Tunnelnotleuchten (3;4) verbunden ist. Der Laderegler (9) speist eine Batterie und/oder einen Akku (14). Die zentrale Steuerbaugruppe (5) ist zudem mit einer Statusanzeige (15) verbunden. Das Gehäuse des Notlichtversorgungsgerätes (2) weist darüber hinaus gemäß Figur 2 eine Kabeleinführung mit Zugentlastung (16), Kabelanschlussklemmen (17), Gerätetrennschalter und Sicherungen (18), einen Trenntransformator (19), einen Türschalter (20) für die Gehäuseinnenbeleuchtung und die Gerätebeleuchtung (21) auf. Die Busankopplung des NVG (2) erfolgt über zwei serielle Schnittstellen. Diese stellen die Verbindung zu den benachbarten NVG dar. Beide Schnittstellen sind gleichwertig. Dadurch kann das NVG (2) aufgrund der Ringstruktur in beide Richtungen mit der TÜZ (1) kommunizieren.
Bei bestimmten Störungen im NVG (2) (z. B. Tiefentladungen) schaltet die zentrale Steuerbaugruppe (5) vor dem endgültigen Abschalten des NVG (2) einen Bypass zwischen beiden Schnittstellen. Dies stellt sicher, dass die anderen im Bussystem vorhandenen NVG (2) weiterhin mit der TÜZ (1) kommunizieren können.
Bei Ausfall des Bussystems an einer Stelle oder eines Abschnittes werden dadurch alle anderen NVG (2) erreicht.
Die TÜZ (1) weist als Zentrale einen PC (22) auf, der über eine unabhängige Stromversorgung-USV (23) sowie einen Hauptsschalter (24) mit der Netzleitung (230 V) verbunden ist und jederzeit mit Strom versorgt wird (Figur 4). Der PC (22) ist mit
- einer Potentialtrennung (25) mit einer Reihe von externen Kontakteingängen,
- mehreren - vorzugsweise zwei - BUS-Modulen (26;27), die mit einem Kommunikationsnetz des NVG (2) korrespondieren,
- einer Funkuhr (28)
- ggf. über ein Modem (29) mit einer Fernwirkeinrichtung (30)
- ggf. einem Drucker (31) und
- einem Ethernetanschluss (32)
versehen bzw. verbunden.

Jedes NVG (2) sowie der PC (22) der TÜZ (1) verfügt über zwei Schnittstellen und kommuniziert jeweils mit seinem linken und rechten Nachbarn in der ringförmig angelegten Verkabelung. Der PC (22) der TÜZ (1) arbeitet als Master und fragt abwechselnd über eine seiner Schnittstellen den Status der NVG (2) ab. Bei Ausfall eines NVG (2) kann also der eine Teil der übrigen NVG noch über die erste Schnittstelle des PC (22) der TÜZ (1) und er andere Teil über die zweite Schnittstelle erreicht werden (Redundanz).
Bei Ausfall der Stromversorgung eines NVG (2) wird durch ein Relais im NVG (2) automatisch ein Bypass für den BUS geschaltet, so dass die linken und rechten Nachbarn des ausgefallenen NVG (2) direkt miteinander verbunden werden.
Diese Bypass-Schaltung wird auch dann vorgenommen, wenn die Selbstüberwachung eines NVG (2)(externer Watschdog) eine Funktionsstörung des Microcontrollers feststellt. Wenn ein NVG (2) über einen längeren Zeitraum von vorzugsweise 15 Sekunden auf keiner der beiden Schnittstellen Kommunikation feststellt, geht es von einer BUS-Störung und/oder einem Ausfall der TÜZ (1) aus und schaltet seine beiden Leuchten ein.
Bei Netzausfall wird zunächst auf Batterie-/Akkubetrieb umgeschaltet. Wird die Tiefentladegrenze erreicht, schaltet sich das NVG (2) komplett ab, wobei automatisch der Bypass aktiviert wird. Kehrt danach die Netzspannung zurück, startet das NVG (2) automatisch einen Funktionstest.
Die Nummerierung / Adressierung der NVG (2) erfolgt automatisch entsprechend ihrer Position in der Verkabelung, ausgehend von der ersten Schnittstelle des PC (22) der TÜZ (1). Wenn der PC (22) der TÜZ (1) eine Statusmeldung mit ungültiger Nummerierung erhält, wird mit dem Adressierungsbefehl eine Neuadressierung aller NVG (2) vorgenommen. Dazu sendet der PC (22) über seine erste Schnittstelle die Adresse "1" an das erste NVG (2). Dieses speichert die "1" als eine Adresse und sendet eine "2" an das nächste NVG (2) usw., bis der PC über seine zweite Schnittstelle eine Adresse empfängt, die der Anzahl der NVG's plus 1 entspricht.

Mit dem Prüftaster (11) wird eine Funktionsprüfung am NVG (2) ausgelöst. Es erfolgt eine Umschaltung von Netz- auf Batterie-/ Akkubetrieb. Der Zustand der Prüfung wird an einer LED-Kombination als Statusanzeige (15) angezeigt. Die Betätigung des Prüftasters (11) sowie während der Prüfung auftretende Störungen werden in der TÜZ (1) protokolliert. Nach 5 Minuten wird die Prüfung automatisch beendet und das NVG (2) stellt denselben Zustand wie vor Beginn der Prüfung her.
Die Überwachungseinrichtung des NVG (2) erfüllt nachfolgende Anforderungen:
- permanente Überwachung der Batterie-/Akkuspannung und/oder der Energiebilanz (Ladestrom, Verbraucherstrom, Entladestrom)
- Durchführung von wöchentlichen Funktions- und jährlichen Betriebsdauertests, initiiert durch die TÜZ (1)
- automatische Weiterleitung der Testergebnisse (Netz-, Batterie-, Akku-, Ladeeinrichtungs-, Wechselrichter und Lampen-Check) sowie der Ergebnisse des Betriebsdauertests an die TÜZ (1)
- integriertes Prüfprogramm zur Eigenüberwachung des NVG (2) mit Statusanzeigen (mittels LED) und Registrierung auftretender Störungen
- permanente Überwachung der in Betrieb befindlichen Leuchten
- Überwachung des Prüftasters (11) sowie des internen/externen EIN-Tasters für die Tunnelsicherheitsbeleuchtung.

Zum Einschalten der TSB verfügt jedes NVG (2) über einen am Gehäusedeckel frontal mittig, hinterleuchteten EIN-Taster. Dieser befindet sich vorzugsweise auf dem Gehäusedeckel des NVG (2). Es kann auch ein externer EIN-Schalter installiert werden. Es ist sinnvoll, den EIN-Schalter auf dem Gehäusedeckel des NVG (2) zu um- oder beleuchten und mit einer Beschriftung für Licht zu versehen. Die TSB kann durch Betätigung des EIN-Schalters nur EIN geschaltet werden. Ein AUS schalten ist - wie bereits geschildert - aus Sicherheitsgründen nicht möglich. Durch die Betätigung des EIN-Schalters wird die gesamte Beleuchtung angeschaltet. Dies kann selbstverständlich auch durch die TÜZ (1) oder über Fernwirksysteme erfolgen. Der Einschaltkreis wird permanent überwacht. Alle Schalthandlungen und Störungen werden an die TÜZ (1) gemeldet.
Im NVG (2) können zudem zusätzliche Meldeeingänge zur Weiterverarbeitung über das BUS-System vorgesehen werden. Diese können für die Überwachung der Tunnelelektranten und als Reserve für z. B. Isolationswächter verwendet werden.

Es wird vorzugsweise ein von der Stromversorgung galvanisch getrenntes BUS-System eingesetzt. Die Anbindung der NVG (2) an das BUS-System erfolgt dabei grundsätzlich ohne zusätzliche Signalverstärker. Bei Störungen des BUS-Systems erfolgt das automatische Einschalten der TSB innerhalb einer sehr kurzen Zeit von vorzugsweise 15 Sekunden.
Durch die spezielle und erfindungsgemäße Verkabelung der NVG innerhalb des Tunnels werden große Entfernungen vermieden. Bei einseitiger Verkabelung ist der Ring derart aufzubauen, dass vom Tunnelanfang bis zum Tunnelende (Hinrichtung) nur jedes zweite NVG (2) angeschlossen wird und die verbleibenden NVG (2) erst in die Rückleitung eingebunden werden.

### Liste der verwendeten Bezugszeichen

- 1 -: Tunnelüberwachungszentral TÜZ
- 2 -: Notlichtversorgungsgerät NVG
- 3 -: Tunnelnotleuchte
- 4 -: Tunnelnotleuchte
- 5 -: zentrale Steuerbaugruppe
- 6 -: Kommunikationsschnittstelle
- 7 -: Kommunikationsnetz
- 8 -: Wechselrichter
- 9 -: Laderegler
- 10 -: Netzteil
- 11 -: Prüftaste
- 12 -: Netzleitung
- 13 -: Schalter
- 14 -: Batterie- und/oder Akku
- 15 -: Statusanzeige
- 16 -: Zugentlastung
- 17 -: Kabelanschlussklemmen
- 18 -: Gerätetrennschalter und Sicherungen
- 19 -: Trenntransformator
- 20 -: Türschalter
- 21 -: Gerätebeleuchtung
- 22 -: PC
- 23 -: unabhängige Stromversorgung USV
- 24 -: Hauptschalter
- 25 -: Potentialtrennung
- 26 -: BUS-Modul
- 27 -: BUS-Modul
- 28 -: Funkuhr
- 29 -: Modem
- 30 -: Fernwirkeinrichtung
- 31 -: Drucker
- 32 -: Ethernetanschluss

## Patentansprüche

1. Verfahren zur sicheren Notbeleuchtung von Tunneln, insbesondere von Eisenbahntunneln im Gefahrenfall, wobei mittels einer Steuerung einer aus einer Tunnelüberwachungszentrale TÜZ (1) und Notlichtversorgungsgeräten NVG (2) bestehenden, bedarfsorientiert im Bereitschaftsbetrieb arbeitenden, zumindest zeitweilig stromversorgungsautarken Tunnelsicherheitsbeleuchtung (TSB), die über eine Kommunikationsleitung mit einem Fernwirksystem verbunden ist, eine Überwachung der Notbeleuchtung des Tunnels durchgeführt, mögliche Ausfälle im System erkannt, sicher protokolliert sowie einer Beseitigung zugeführt werden **gekennzeichnet dadurch, dass** die Notlichtversorgungsgeräte NVG über einen Ringbus mit der Tunnelüberwachungszentrale TÜZ (1) verbunden sind, wobei der Ring bei einseitiger Verkabelung derart aufgebaut wird, dass vom Tunnelanfang bis zum Tunnelende nur jedes zweite NVG (2) angeschlossen wird und die verbleibenden NVG (2) erst in die Rückrichtung eingebunden werden.

2. Verfahren nach Anspruch 1, ***gekennzeichnet dadurch, dass*** eine permanente Überwachung der Betriebsfähigkeit aller im Tunnel angeordneten Lampen durchgeführt wird.

3. Verfahren nach Anspruch 1 oder 2, ***gekennzeichnet dadurch, dass*** eine permanente Überwachung der Betriebsfähigkeit aller verwendeten BUS-Systeme der NVG (2) durchgeführt wird.

4. Verfahren nach einem der Ansprüche 1 bis 3, ***gekennzeichnet dadurch, dass*** eine permanente Überwachung der stromversorgungsautarken Batterie- und/oder Akkuspannung durchgeführt wird.

5. Verfahren nach einem der Ansprüche 1 bis 4, ***gekennzeichnet dadurch, dass*** eine permanente Überwachung einer zuvor ermittelten Strombilanz, die sich insbesondere aus Ladestrom, Verbraucherstrom und Entladestrom der NVG zusammensetzt, durchgeführt wird.

6. Verfahren nach einem der Ansprüche 1 bis 5, ***gekennzeichnet dadurch, dass*** über ein im NVG (2) integriertes internes Prüfprogramm eine Eigenüberwachung des NVG (2) durchgeführt wird.

7. Vorrichtung zur sicheren Notbeleuchtung von Tunneln, insbesondere von Eisenbahntunneln im Gefahrenfall, mit
- einer aus Tunnelüberwachungszentrale TÜZ (1) und aus Notlichtversorgungsgeräten NVG (2) bestehenden, bedarfsorientiert im Bereitschaftsbetrieb arbeitenden, zumindest zeitweilig stromversorgungsautarken Tunnelsicherheitsbeleuchtung (TSB),
- einem Fernwirksystem und
- einer die Tunnelsicherheitsbeleuchtung mit dem Fernwirksystem verbindenden Kommunikationsleitung (7), wobei die Tunnelsicherheitsbeleuchtung ein Steuermittel (5, 22) einschliesst, um eine Überwachung der Notbeleuchtung durchzufhüren, mögliche Ausfälle in der Vorrichtung zur sicheren Notbeleutung zu erkennen und sicher zu protokollieren sowie die einer Beseitigung zuzuführen, **gekennzeichnet durch** einen Ringbus über den die Notlichtversorgungsgeräten NVG mit der Tunnelüberwachungszentrale TUZ (1) verbunden sind, wobei der Ring bei einseitiger Verkabelung derart aufgebaut ist, dass vom Tunnelanfang bis zum Tunnelende nur jedes zweite NVG (2) angeschlossen ist und die verbleibenden NVG (2) erst in die Rückleitung eingebunden sind.

8. Vorrichtung nach Anspruch 7, ***gekennzeichnet dadurch, dass*** alle installierten NVG (2) mittels BUS-Systemen (26;27) an die TÜZ (1) angeschlossen sind.

9. Vorrichtung nach Anspruch 7 oder 8, ***gekennzeichnet dadurch, dass*** die TÜZ (1) als Schnittstelle zum übergelagerten Kommunikationsnetz, zum örtlichen BUS-System (26;27) und zu sonstigen elektrotechnischen Komponenten ausgebildet ist.

10. Vorrichtung nach einem der Ansprüche 7 bis 9, ***gekennzeichnet dadurch, dass*** die TÜZ (1) mit einer unterbrechungsfreien Stromversorgung USV (23) und einer Funkuhr (28) ausgestattet ist.

11. Vorrichtung nach einem der Ansprüche 7 bis 10, ***gekennzeichnet dadurch, dass*** das NVG (2) eine zentrale Steuerbaugruppe (5) aufweist, die mit einem Wechselrichter (8), einem Laderegler (9), einer Kommunikationsschnittstelle (6), mindestens zwei Tunnelleuchten (3;4) und einer Statusanzeige (15) verbunden ist.

12. Vorrichtung nach einem der Ansprüche 7 bis 11, ***gekennzeichnet dadurch, dass*** der Laderegler (9) einerseits über ein Netzteil (10) und eine Prüftaste (11) mit einer Netzleitung (12) und andererseits mit einer(m) Batterie/Akku (14) verbunden ist.

13. Vorrichtung nach einem der Ansprüche 7 bis 12, ***gekennzeichnet dadurch, dass*** der Wechselrichter (8) einerseits über einen Schalter (13) mit den Tunnelleuchten (3;4) oder der Netzleitung (12) und andererseits, vorzugsweise über einen weiteren Schalter, mit dem Laderegler (9) verbunden ist.

## Claims

1. A method for the secure emergency lighting of tunnels, more preferably of railway tunnels in the event of danger, wherein by means of a control of tunnel safety lighting (TSL) which consists of a tunnel monitoring control room TMCR (1) and emergency light supply devices ELSD (2) operating in standby mode based on requirement and which is at least partially independent of power supply and connected with a remote action system via a communications line, monitoring of the emergency lighting of the tunnel is carried out, possible failures in the system are detected, securely recorded and rectification initiated, **characterized in that** the emergency light supply devices ELSD are connected via a ring BUS with the tunnel monitoring control room TMCR (1), wherein the ring with one-sided cabling is constructed in such a manner that from the tunnel start to the tunnel end only every second ELSD (2) is connected and the remaining ELSD (2) are only incorporated in the return direction.

2. The method according to Claim 1, **characterized in that** permanent monitoring of the operational capability of all lamps arranged in the tunnel is carried out.

3. The method according to Claim 1 or 2, **characterized in that** permanent monitoring of the operational capability of all BUS systems of the ELSD (2) used is carried out.

4. The method according to any one of the Claims 1 to 3, **characterized in that** permanent monitoring of the power supply-independent battery and/or accumulator voltage is carried out.

5. The method according to any one of the Claims 1 to 4, **characterized in that** permanent monitoring of a previously determined power balance, more preferably composed of charge current, consumer current and discharge current of the ELSD is carried out.

6. The method according to any one of the Claims 1 to 5, **characterized in that** via an internal test program integrated in the ELSD (2) self-monitoring of the ELSD (2) is carried out.

7. A device for the safe emergency lighting of tunnels, more preferably of railway tunnels in the event of danger, with
- a tunnel safety lighting (TSL) consisting of tunnel monitoring control room TMCR (1) and emergency light supply devices ELSD (2), which operates in standby mode based on requirement and at least part of the time is independent of power supply
- a remote action system and
- a communications line (7) connecting the tunnel safety lighting with the remote action system, wherein the tunnel safety lighting includes a control means (5, 22) in order to carry out, safely record and bring about rectification of possible failures in the device for safe emergency lighting, **characterized by** a ring bus via which the emergency light supply devices ELSD are connected with the tunnel monitoring control room TMCR (1), wherein the ring with one-sided cabling is constructed in such a manner that from the tunnel start to the tunnel end only every second ELSD (2) is connected and the remaining ELSD (2) are only incorporated in the return line.

8. The device according to Claim 7, **characterized in that** all installed ELSD (2) are connected to the TMCR (1) by means of BUS systems (26; 27).

9. The device according to Claim 7 or 8, **characterized in that** the TMCR (1) are embodied as interface to the overlaid communications network to the local BUS system (26; 27) and to other electronic components.

10. The device according to any one of the Claims 7 to 9, **characterized in that** the TMCR (1) is equipped with an uninterruptible power supply UPS (23) and a radio clock (28).

11. The device according to any one of the Claims 7 to 10, **characterized in that** the ELSD (2) comprises a central control assembly (5) which is equipped with an inverter (8), a charge regulator (9), a communications interface (6), at least two tunnel lights (3; 4) and a status display (15).

12. The device according to any one of the Claims 7 to 11, **characterized in that** the charge regulator (9) on the one hand is connected with a mains line (12) and on the other hand with a battery/accumulator (14) via a power supply unit (10) and a test button (11).

13. The device according to any one of the Claims 7 to 12, **characterized in that** the inverter (8) on the one hand is connected with the tunnel lamps (3; 4) or the mains line (12) via a switch (13) and on the other hand, preferentially via a further switch, with the charge regulator (9).

## Revendications

1. Procédé d'éclairage de secours sûr de tunnels, notamment de tunnels ferroviaires en cas de danger, dans lequel, au moyen d'une commande d'un éclairage de sécurité de tunnel (TSB) composé d'une centrale de surveillance de tunnel TÜZ (1) et d'appareils d'alimentation d'éclairage de secours NVG (2), fonctionnant suivant les besoins en mode de disponibilité opératoire et autarcique au moins temporairement au niveau alimentation électrique et qui est rattaché par une ligne de communication à un système agissant à distance, une surveillance de l'éclairage de secours du tunnel est réalisée, les pannes éventuelles du système sont détectées, font l'objet d'une manière sûre d'un protocole et sont amenées à résolution, **caractérisé en ce que** les appareils d'alimentation d'éclairage de secours NVG sont reliés par un bus annulaire à la centrale de surveillance de tunnel TÜZ (1), l'anneau étant réalisé en cas de câblage unilatéral de manière à ce que, du début du tunnel à la fin du tunnel, seul un LVD (2) sur deux soit raccordé et que les NVG restants (2) ne soient intégrés que dans le sens du retour.

2. Procédé selon la revendication 1, **caractérisé par** une surveillance permanente de la capacité opérationnelle de toutes les lampes disposées dans le tunnel.

3. Procédé selon la revendication 1 ou 2, **caractérisé en ce qu'**une surveillance permanente de la capacité opérationnelle de tous les systèmes de BUS des NVG (2) est réalisée.

4. Procédé selon une des revendications 1 à 3, **caractérisé en ce qu'**une surveillance permanente de la tension de batterie et/ou d'accumulateur autarcique au niveau électrique est réalisée.

5. Procédé selon une des revendications 1 à 4, **caractérisé en ce qu'**une surveillance permanente d'un bilan électrique déterminé au préalable et composé notamment du courant de charge, du courant de consommateur et du courant de décharge des NVG est réalisée.

6. Procédé selon une des revendications 1 à 5, **caractérisé en ce que,** grâce à un programme de contrôle interne intégré dans le NVG (2), une auto-surveillance du NVG (2) est réalisée.

7. Procédé d'éclairage de secours sûr de tunnels, notamment de tunnels ferroviaires en cas de danger, comportant
- d'une centrale de surveillance de tunnel TÜZ (1) et d'un éclairage de sécurité de tunnel (TSB) composé d'appareils d'alimentation d'éclairage de secours NVG (2), fonctionnant suivant les besoins en mode de disponibilité opératoire et autarcique au moins temporairement au niveau alimentation électrique,
- d'un système agissant à distance et
- d'une ligne de communication (7) reliant l'éclairage de sécurité de tunnel au système agissant à distance, l'éclairage de sécurité du tunnel incluant un moyen de commande (5, 22) afin de réaliser une surveillance de l'éclairage de secours, de détecter les pannes éventuelles du dispositif et de les soumettre à un protocole sûr et les amener à résolution, **caractérisé par** un bus annulaire par lequel les appareils d'alimentation d'éclairage de secours NVG sont reliés à la centrale de surveillance de tunnel TÜZ (1), l'anneau étant réalisé en cas de câblage unilatéral de manière à ce que, du début du tunnel à la fin du tunnel, seul un LVD (2) sur deux soit raccordé et que les NVG restants (2) ne soient intégrés que dans la conduite de retour.

8. Dispositif selon la revendication 7, **caractérisé en ce que** tous les NVG (2) installés sont raccordés par des systèmes de BUS (26 ; 27) à la TÜZ (1).

9. Dispositif selon la revendication 7 ou 8, **caractérisé en ce que** la TÜZ (1) est réalisée sous forme d'interface avec le réseau de communication préposé, avec le système de BUS local (26 ; 27) et avec les autres composants électrotechniques.

10. Dispositif selon une des revendications 7 à 9, **caractérisé en ce que** la TÜZ (1) est équipée d'une alimentation électrique sans coupure USV (23) et d'une horloge radiopilotée (28).

11. Dispositif selon une des revendications 7 à 10, **caractérisé en ce que** le NVG (2) comporte un sousensemble de commande central (5) qui est raccordé à un onduleur (8), un régleur de charge (9), une interface de communication (6), au moins deux éclairages de tunnel (3 ; 4) et un indicateur d'état (15).

12. Dispositif selon une des revendications 7 à 11, **caractérisé en ce que** le régleur de charge (9) est raccordé d'une part par un bloc d'alimentation (10) et une touche de contrôle (11) à une ligne de secteur (12) et d'autre part à une batterie/un accumulateur (14).

13. Dispositif selon une des revendications 7 à 12, **caractérisé en ce que** l'onduleur (8) est raccordé d'une part par un interrupteur (13) aux éclairages de tunnel (3 ; 4) ou à la ligne de secteur (12) et, d'autre part, de préférence par un autre interrupteur au régleur de charge (9).
